Europäisches Patentamt

European Patent Office

Office européen des brevets

(19)

(11) Veröffentlichungsnummer: **0 445 380 A2**

## (12) EUROPÄISCHE PATENTANMELDUNG

(21) Anmeldenummer: 90122978.1

(22) Anmeldetag: 30.11.90

(51) Int. Cl.5: **H04B 3/23**

(30) Priorität: 08.03.90 DE 4007354

(43) Veröffentlichungstag der Anmeldung:
**11.09.91 Patentblatt 91/37**

(84) Benannte Vertragsstaaten:
**AT BE CH DE DK FR GB IT LI NL SE**

(71) Anmelder: **Siemens Aktiengesellschaft
Wittelsbacherplatz 2
W-8000 München 2(DE)**

(72) Erfinder: **Schenk, Heinrich, Dr.-Ing.
Fatimastrasse 3
W-8000 München 71(DE)**

(54) Anordnung zur Erzeugung eines Kompensationssignals für digitale Übertragungseinrichtungen.

(57) Das Kompensationssignal $s_K$ wird durch die Kettenschaltung eines Transversalfilters (F1) und eines Rekursivfilters (F2) gebildet. Zwischen den Filtern müssen keine weiteren Daten ausgetauscht werden.

# FIG 4

EP 0 445 380 A2

Die Erfindung betrifft eine Anordnung zur Erzeugung eines Kompensationssignals für digitale Übertragungseinrichtungen nach dem Oberbegriff des Patentanspruchs 1.

Es ist bekannt, Digitalsignale im Duplexverfahren über eine Zweidrahtleitung zu übertragen. Über eine Gabelschaltung werden die Sendesignale an eine Zweidrahtleitung abgegeben und Empfangssignale von der Zweidrahtleitung auf eine Empfangseinrichtung geführt. Außer den Empfangssignalen gelangen zusätzlich als Echosignale bezeichnete Störsignale zur Empfangseinrichtung, die durch die Sendesignale in der Gabelschaltung durch eine nicht vollständige Entkopplung der Übertragungswege und an Reflexionsstellen des Übertragers und der angeschlossenen Zweidrahtleitung entstehen. Hierdurch liegt am Empfangsausgang der Gabelschaltung ein Signalgemisch aus dem tatsächlichen Empfangssignal und dem Echosignal an. Im Echokompensator wird das Echosignal nachgebildet, indem aus dem digitalen Sendesignal durch eine Filteranordnung das Echosignal nachgebildet und von dem aus Empfangssignal und Echosignal zusammengesetzten Eingangssignal subtrahiert wird. Bei höheren Anforderungen an den Echokompensator werden adaptive digitale Filter eingesetzt, deren Koeffizienten einstellbar sind.

In den "Kleinheubacher Berichten", Band 26, 1983 des Fernmeldetechnischen Zentralamtes, Darmstadt, Seiten 427 bis 435 ist die Verwendung einer Filteranordnung aus einem Transfersalfilter und einem rekursiven Filter zur Echokompensation bekannt. Das Transversalfilter wird zur Kompensation des unmittelbar auf einen Impuls folgenden Echoanteils verwendet, während durch das Rekursivfilter das abklingende Echosignal kompensiert wird. Das gesamte Kompensationssignal ergibt sich durch eine Überlagerung der Ausgangssignale beider Filter. Aus technischen Gründen ist jedoch die Filteranordnung nicht immer in einer Schaltungseinheit realisierbar. Bei einer Aufteilung auf verschiedene Schaltungseinheiten muß jedoch eine Vielzahl von Daten dem Rekursivfilter zugeführt werden. Dasselbe Problem tritt bei entscheidungsrückgekoppelten Entzerrern auf. Hier wird aus den Codierten Empfangsdaten ein Korrektursignal gewonnen, das in einem Entzerrer von dessen Eingangssignal subtrahiert wird, um ein möglichst unverzerrtes Empfangssignal einer Entscheidungsschaltung der Empfangseinrichtung zuführen zu können.

Aufgabe der Erfindung ist es eine Anordnung zum Erzeugung eines Kompensationssignals anzugeben, bei der Filter mit einer geringen Anzahl von Koeffizienten verwendet werden und eine möglichst geringe Anzahl von Daten zwischen den Filtern ausgetauscht werden muß.

Diese Aufgabe wird durch die im Patentanspruch 1 angegebenen Merkmale gelöst. Vorteilhafte Ausbildungen sind in den abhängigen Ansprüchen angegeben.

Die Kettenschaltung der Filter der Filteranordnung bewirkt, daß nur das Ausgangssignal vom ersten Filter an das zweite Filter übergeben werden muß. Die Reihenfolge der Filter ist prinzipiell gleichgültig. Jedoch wird man das erste Filter, das eine Vielzahl von einstellbaren Filterkoeffizienten aufweist, gemeinsam mit der Nachstelleinrichtung für die Filterkoeffizienten realisieren. Als erstes Filter kann prinzipiell jedes Filter mit einer praktisch endlichen Impulsantwort verwendet werden, also auch ein rekursives Filter.

Vorteilhaft ist jedoch die Verwendung eines transversalen Filters oder auch eines anderen Filtertyps mit rückführungsfreier Struktur, da bei diesen Filtertypen durch das Variieren einer Vielzahl von Filterkoeffizienten ein optimales Kompensationssignal erzeugt werden kann. Bei einem Transversalfilter müssen nur die wenigen unterschiedliche Eingangswerte des codierten Signals verarbeitet werden, so daß dieser Filtertyp am geeignetsten erscheint.

Als zweites Filter ist ein Rekursivfilter erster Ordnung in der Regel ausreichend. Je nach Anforderungen kann auch ein Rekursivfilter mit mehreren variablen oder festen Kofeffizienten realisiert werden. Es benötigt außer dem Ausgangssignal des ersten Filters keine weiteren Daten, wenn es mit festen Koeffizienten realisiert ist. Deshalb können die Filter auch problemlos in unterschiedlichen Schaltungsteilen (z.B. eines integrierten Schaltkreises) oder Schaltungseinheiten aufgebaut werden.

Die Länge des ersten Filters, d.h. die Anzahl der Verzögerungsglieder bzw. die Anzahl der Koeffizienten, wird durch das zweite Filter wesentlich reduziert. Da das Echosignal im wesentlichen von der Induktivität des Übertragers der Gabelschaltung und der daran angeschalteten Leitung bestimmt wird - diesem soll das Kompensationssignal möglichst genau entsprechen - ist damit bei vorgegebenen Anforderungen an den Restfehler des Eingangssignals auch die Anzahl der Filterkoeffizienten festgelegt.

Die Filteranordnung kann prinzipiell auch aus mehr als zwei Filtern aufgebaut werden. Insbesondere kann ein Filter höherer Ordnung häufig durch zwei oder mehrere Filter niedrigerer Ordnung ersetzt werden.

Die Filter können in herkömmlicher Schaltungstechnik aus Registern, Multiplizierern und Addierern aufgebaut werden, ebenso können sie jedoch auch mit Mikrorechnern realisiert werden.

Als Ausführungsbeispiel der Erfindung wird ein Echokompensator anhand von Figuren näher erläutert.

Es zeigen

Fig. 1    ein Prinzipschaltbild einer Übertragungseinrichtung,
Fig. 2    das Echosignal eines Einheitsimpulses,
Fig. 3    eine bekannte Filteranordnung,

Fig. 4    eine erfindungsgemäße Filteranordnung,
Fig. 5    ein Prinzipschaltbild eines Rekursivfilters,
Fig. 6    eine weitere Realisierungsmöglichkeit,
Fig. 7    ein Diagramm des Restfehlers,
Fig. 8    ein zweites Diagramm des des Restfehlers,
Fig. 9    ein Diagramm des Rauschabstandes,

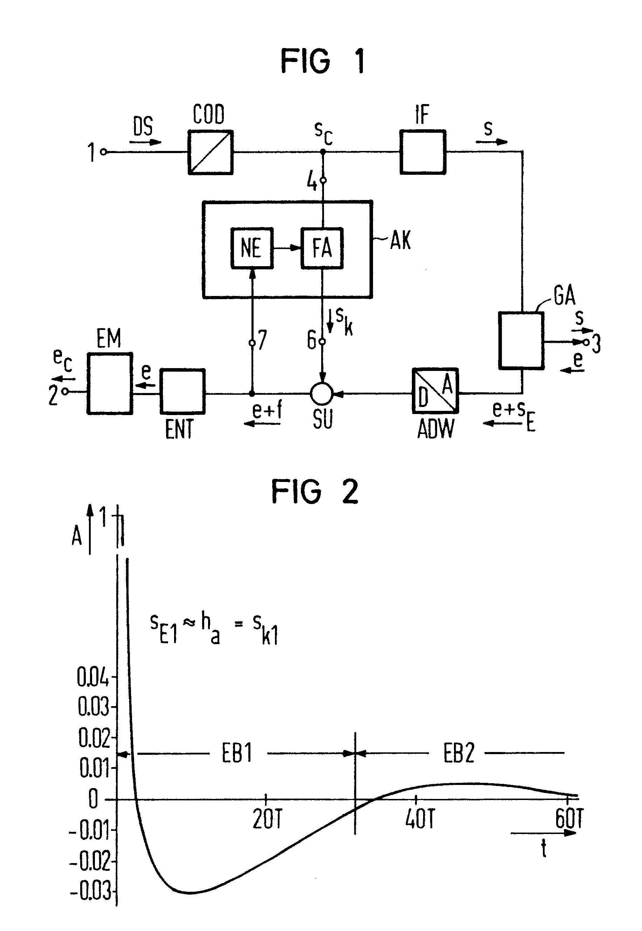

Die in Figur 1 dargestellte Übertragungseinrichtung enthält einen Kodierer COD, dem ein Digitalsignal DS über seinen Eingang 1 zugeführt wird. Dies wird beispielsweise in ein mit zwei oder vier Stufen codiertes Digitalsignal $s_c$ umgesetzt und über einen Impulsformer IF und eine Gabelschaltung GA als Sendesignal s auf einer Zweidrahtleitung, die an dem Anschlußpunkt 3 der Gabelschaltung angeschlossen ist, übertragen. Ein Empfangssignal e wird über die Gabelschaltung gemeinsam mit einem störenden Signalteil, dem Echosignal $s_E$, einem Analog-Digital-Wandler ADW zugeführt und gelangt über eine Subtraktionseinrichtung SU und einen Entzerrer ENT, an dessen Ausgang 2 im Idealfall das Empfangssignal unverzerrte Empfangssignal e abgegeben wird, zu einer Entscheidungsschaltung e zur Rückumsetzung in ein codiertes Signal $e_c$ bzw. binäres Signal. Die Anordnung AK zur Erzeugung eines Kompensationssignals $s_K$ liefert das aus dem codierten Sendesignal $s_c$ gewonnenes Kompensationssignal $s_{k'}$ das von dem Eingangssignal $e + s_E$ subtrahiert wird. Das Echosignal $s_E$ beinhaltet sämtliche Echosignale, die durch nicht ausreichendes Entkoppeln des Sendesignals oder durch Reflexionen entstehen. Der Anteil des Echosignals, der durch Reflexionen am fernen Ende der Zweidrahtleitung dem Empfangssignal e überlagert ist, wurde in Fig. 1 vernachlässigt, da er verhältnismäßig gering ist. Über eine Nachstelleinrichtung NE, die über ihren Nachstelleingang 7 das am Ausgang der Subtraktionseinrichtung SU anliegende mit einem Fehlersignal f behaftete Empfangssignal e auswertet, wird die Filteranordnung FA gesteuert, bis das Fehlersignal f ein Minimum annimmt. Als Subtrkationseinrichtung kann ein Subtrahierer oder ein Addierer verwendet werden, dem das Kompensationssignal mit umgekehrtem Vorzeichen zugeführt wird.

Bei der in Figur 1 dargestellten Anordnung AK handelt es sich um einen Echokompensator, bei dem aus dem codierten Sendesignal $s_c$ das Kompensationssignal $s_k$ gewonnen wird. Bei einem entscheidungsrückgekoppelten Entzerrer wird anstelle des codierten Sendesignals das entsprechende Empfangssignal $e_c$ vom Ausgang der Entscheidungsschaltung EM der Filteranordnung FA zugeführt.

Dem Echosignal entspricht dann der die Verzerrung hervorrufende störende Signalanteil.

In Figur 2 ist das Echosignal $s_{E1}$ als Antwort auf einen Einheitsimpuls mit der Amplitude A = 1 dargestellt. Der erste Echobereich EB1 soll im wesentlichen durch die Impulsantwort des ersten Filters kompensiert werden, während der zweite Echobereich EB2 durch die Impulsantwort des Rekursivfilters kompensiert werden soll.

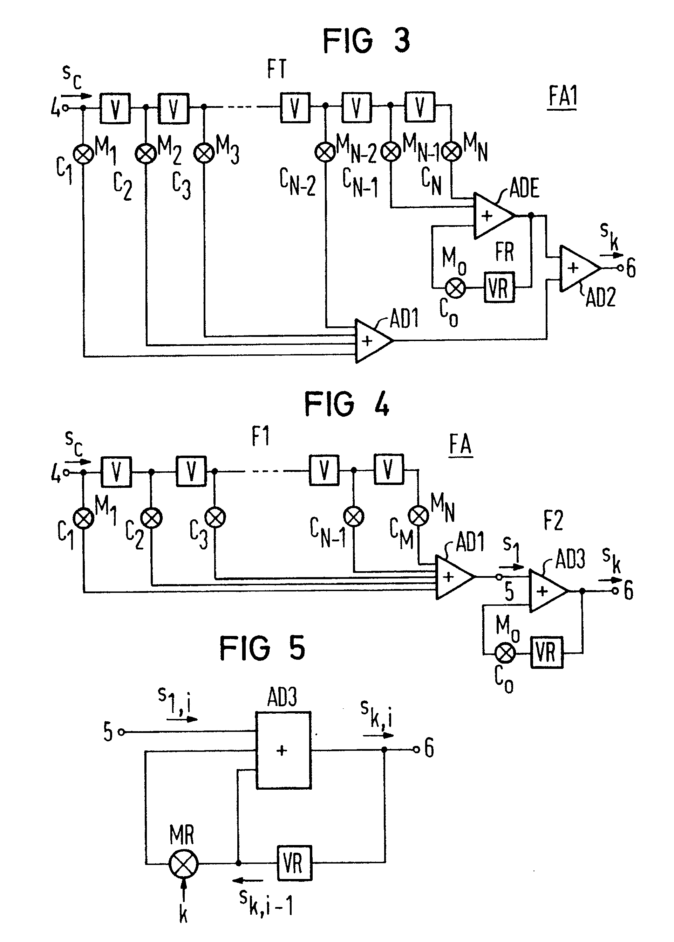

In Figur 3 ist eine bekannte Filteranordnung FA mit einem Transversalfilter FT und einem Rekursivfilter FR dargestellt. Das Transversalfilter enthält mehrere Verzögerungsglieder V, an die Multiplikatoren M angeschaltet sind. Die Ausgänge der Multiplikatoren $M_1$ bis $M_{N-2}$ sind über einen ersten Addierer AD1 zusammengefaßt. Die Ausgänge der beiden letzten Multiplikatoren $M_{N-1}$ und $M_N$ sind mit Eingängen einer Addiereinrichtung ADE verbunden, deren Ausgang über ein weiteres Verzögerungsglied VR und einen Multiplizierer $M_0$ auf einen weiteren Eingang rückgeführt ist. Der Ausgang des ersten Addierers AD1 und der Ausgang der Addiereinrichtung werden über einen zweiten Addierer AD2 zusammengefaßt, an dessen Ausgang 6 das Kompensationssignal $s_k$ abgegeben wird. Eine prinzipiell gleichwertige Schaltungsanordnung ist im Bild 3 der Kleinheubacher Berichte dargestellt. Dem Rekursivfilter wird das codierte Sendesignal verzögert zugeführt. Es muß eine höhere Ordnung aufweisen, um die gewünschte Impulsantwort zu erzeugen.

In Figur 4 ist eine erfindungsgemäße Filteranordnung FA dargestellt. Das erste Filter F1 weist als Transversalfilter eine endliche Impulsantwort auf. Es enthält wiederum Multiplizierer $M_1$ bis $M_N$, die an die Verzögerungsglieder V angeschaltet und über den ersten Addierer AD1 zusammengefaßt sind. Der Ausgang des Addierers stellt den Filterausgang 5 dar. Ein Transversalfilter oder ein Filter mit einem rückführungsfreien Aufbau ermöglicht durch voneinander unabhängige Steuerung der Koeffizienten, ein optimales Kompensationssignal zu erzeugen.

Der Filterausgang 5 ist mit dem Eingang des zweiten Filters F2, eines Rekursivfilters erster Ordnung, verbunden. Das Rekursivfilter besteht aus einem dritten Addierer AD3, dessen Ausgang über das Verzögerungsglied VR und den Multiplizierer $M_0$ mit einem zweiten Addierereingang verbunden ist. Der Ausgang des Addierers stellt den Ausgang 6 der Filteranordnung FA dar.

In Figur 5 ist eine Realisierungsmöglichkeit für das Rekursivfilter dargestellt. Es besteht im wesentlichen aus dem dritten Addierer AD3, der drei Eingänge aufweist, dem Verzögerungsglied VR, das vom Ausgang 6 des Addierers AD3 auf einen zweiten Eingang geschaltet ist, sowie einem Multiplizierer MR, der zwischen dem Ausgang des Verzögerungsgliedes und einem dritten Eingang liegt. Der beim Filtereingang 5

3

anliegende Eingangswert $s_{1,i}$ wird dem dritten Addierer direkt zugeführt. Zu diesem wird der vorangegangene Ausgangswert $s_{k,i-1}$ addiert und derselbe Ausgangswert multipliziert mit einem Faktor $k = -1/2^p$, $p = 1$, 2, 3, 4, ... subtrahiert.

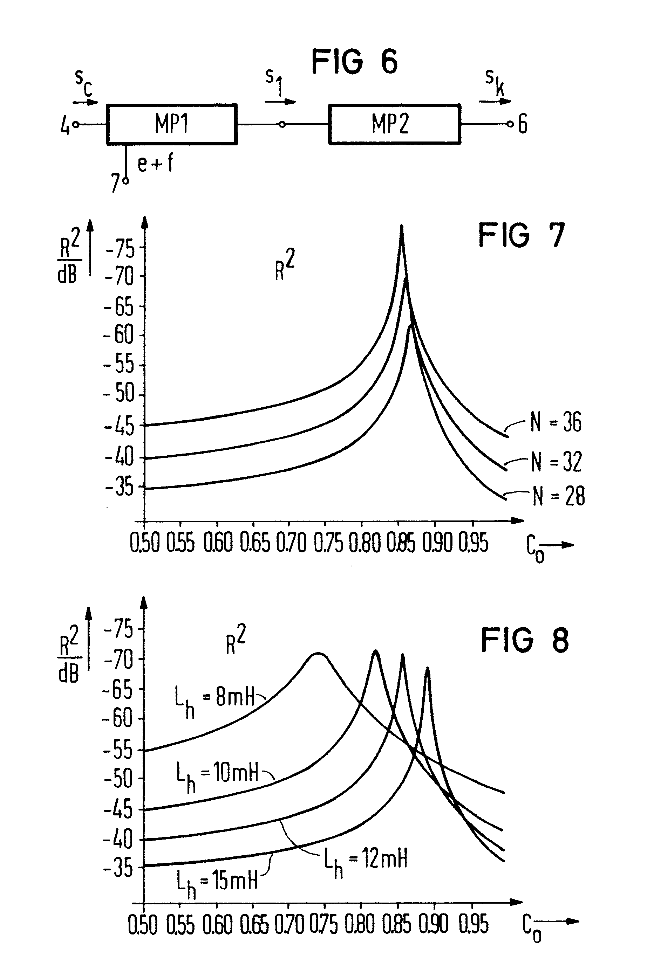

In Fig. 6 ist die Realisierung der Filteranordnung mit zwei Mikrorechnern MP1 und MP2 (Mikroprozessoren) dargestellt.

Der erste Mikrorechner MP1 bildet das erste Filter F1 nach. Darüber hinaus kann er gegebenenfalls die Aufgaben der Nachstelleinrichtung NE übernehmen. Im zweiten Mikrorechner MP2 wird unter anderem das Rekursivfilter F2 realisiert.

Der Aufbau des Transversalfilters ist ideal für eine Mikrorechnerlösung geeignet. Die codierten Datensignale $s_c$ werden zwischengespeichert, multipliziert und addiert. Das Rekursivfilter kann in einer einzigen Programmschleife realisiert werden, wobei der jeweils gespeicherte Wert $s_{k,i}$ des Kompensationssignals lediglich mit einem konstanten Faktor $C_0$ multipliziert und zum Eingangswert $s_1$ addiert werden muß.

Natürlich ist der Aufbau der Filteranordnung auch in einen einzigen Mikrorechner möglich.

Während bei der herkömmlichen Filteranordnung bei einem durch einen Einheitsimpuls verursachten Echosignal die Echobereiche EB1 und EB2 durch Überlagern der Impulsantworten der beiden Filter F1 und F2 kompensiert wurden, weist die erfindungsgemäße Filteranordnung völlig andere Eigenschaften auf. Zur einfacheren Erklärung wird das Kompensationssignal wieder auf ein von einem Einheitsimpuls erzeugtes Echosignal $s_{E1}$ (Fig. 2) bezogen. Das entsprechende Kompensationssignal $s_{k1}$, also die Impulsantwort $h_a(t)$ der Filteranordnung FA, wird nun aus dem Faltungsprodukt der Impulsantworten der beiden Filter gebildet. Das heißt $h_a(t) = e(t) * h(t)$ soll nun möglichst exakt $s_{E1}$ sein. Hierdurch ergeben sich bei der erfindungsgemäßen Filteranordnung gegenüber den bekannten Filteranordnungen völlig andere Koeffizienten. Wenn kein zusätzliches Verzögerungsglied zwischen dem Ausgang des ersten Filters und dem Ausgang 6 der Filteranordnung eingeschaltet ist, kann jedoch der Nachstellalgorithmus für die Filteranordnung beibehalten werden.

Es ist im allgemeinen ausreichend, ein Rekursivfilter erster Ordnung zu wählen. In der Regel ist ein konstanter Filterkoeffizient $C_0$ ausreichend, um ein ausreichend genaues Kompensationssignal zu erhalten. Der Filterkoeffizient $C_0$ kann sowohl rechnerisch wie experimentell ermittelt werden.

Zum besseren Verständnis soll das Kompensationsproblem kurz mathematisch dargestellt werden.

Bezeichnet man entsprechend der Impulsantwort des ersten Filters F1

$$(1) \qquad c^T = [c_1, c_2, ... c_N]$$

den Vektor der Koeffizienten mit

$$(2) \quad c^T = \left[ C_1, C_2, ... C_N \right] ; \qquad \begin{array}{l} \text{T-transponierter Vektor} \\ \text{oder transponierte Matrix} \end{array}$$

den Vektor der Impulsantwort für das Rekursivfilter F2 mit

$$(3) \qquad h^T = [h_1, h_2, ..., h_M] ,$$

wobei hier gilt:

$$(4) \quad h^T = \left[ 1, C_0, C_0^2, ... C_0^M \right] ,$$

und den Vektor der Echoimpulsantwort mit

$$(5) \qquad g^T = [g_1, g_2, ... g_M] ,$$

dann soll sein

$$(6) \qquad H \times C = g + \delta ,$$

wobei $\delta$ den Fehlervektor $\delta_1$ bis $\delta_M$ und H eine Rechteckmatrix darstellt.

$$(6) \quad H = \begin{bmatrix} h_1 & 0 & 0 \ldots 0 \\ h_2 & h_1 & 0 \ldots 0 \\ h_3 & h_2 & h_1 \ldots 0 \\ \cdot & \cdot & \cdot & \cdot \\ \cdot & \cdot & \cdot & \cdot \\ h_N & \cdot & \cdot & h_1 \\ \cdot & \cdot & \cdot & \cdot \\ \cdot & \cdot & \cdot & \cdot \\ \cdot & \cdot & \cdot & \cdot \\ h_M & \cdot & \cdot & h_{M-N+1} \end{bmatrix}$$

Die im Prinzip unendliche Impulsantwort kann bei einem genügend kleinen Amplitudenwert abgebrochen werden, wodurch sich eine Beschränkung auf M Werte der Impulsantwort ergibt. Dasselbe gilt für die Echoimpulsantwort bzw. das hiermit möglichst gleiche Korrektursignal.

Der quadratische Restfehler ergibt sich aus Gleichung (6) zu

$$(7) \quad \delta^T\delta = [HC - g]^T [HC - g],$$

und der Koeffizientenvektor errechnet sich nach dem Differenzieren der Gleichung (7) zur Ermittlung des Minimums des quadratischen Fehlers zu

$$(8) \quad C = [H^T \times H]^{-1} \times H^T g$$

Mit diesen Beziehungen läßt sich das Verhalten der erfindungsgemäßen Anordnung im Bezug auf das Restecho analysieren.

Die Länge des Filters hängt von der Art der Leitung und vom Übertrager der Gabelschaltung ab. Je kleiner die Hauptinduktivität des Übertragers gewählt wird, desto kürzer wird die Echoimpulsantwort sein und um so weniger Koeffizienten sind für den Echokompensator erforderlich. Andererseits ergibt sich mit einer kleinen Hauptinduktivität ein in seinem Absolutwert größerer Nachschwinger der Leitungsimpulsantwort. Da für die Impulsantwort am Ausgang des Übertragers ein Toleranzschema vorgeschrieben ist, muß dies bei der Dimensionierung berücksichtigt werden. Die folgenden Diagramme gehen von einer als LOOP1 spezifizierten Leitung nach dem "American National Standard for Telecommunication" aus. Die Kurven in Fig. 7 gelten für eine Hauptinduktivität von 12 mH. Als Parameter wurde die Anzahl der Koeffizienten des ersten Filters verwendet. Der quadratische Restfehler $R^2$ ist in Dezibel angegeben.

In Figur 8 ist der quadratische Restfehler in Abhängigkeit von $C_0$ bei N = 32 Koeffizienten dargestellt. Als Parameter wurden mehrere Werte der Hauptinduktivität $L_h$ verwendet. Man erkennt, daß - wie erwartet - der Restfehler mit einer größeren Anzahl N von Koeffizienten verringert werden kann und der Einfluß des Koeffizienten $C_0$ des Rekursivfilters mit zunehmender Induktivität steigt. Es soll hier noch kurz darauf hingewiesen werden, daß ohne weitere Maßnahmen durch den Einsatz des rekursiven Filters das Koeffizienten- bzw. Quantisierungsrauschen in Abhängigkeit vom Koeffizienten des Rekursivfilters im Vergleich zu einer rein nichtrekursiven Filteranordnung steigt. Eine Verbesserung kann durch eine feinere Quantisierung oder eine Verschiebung des Spektrums des Quantisierungsrauschens erzielt werden.

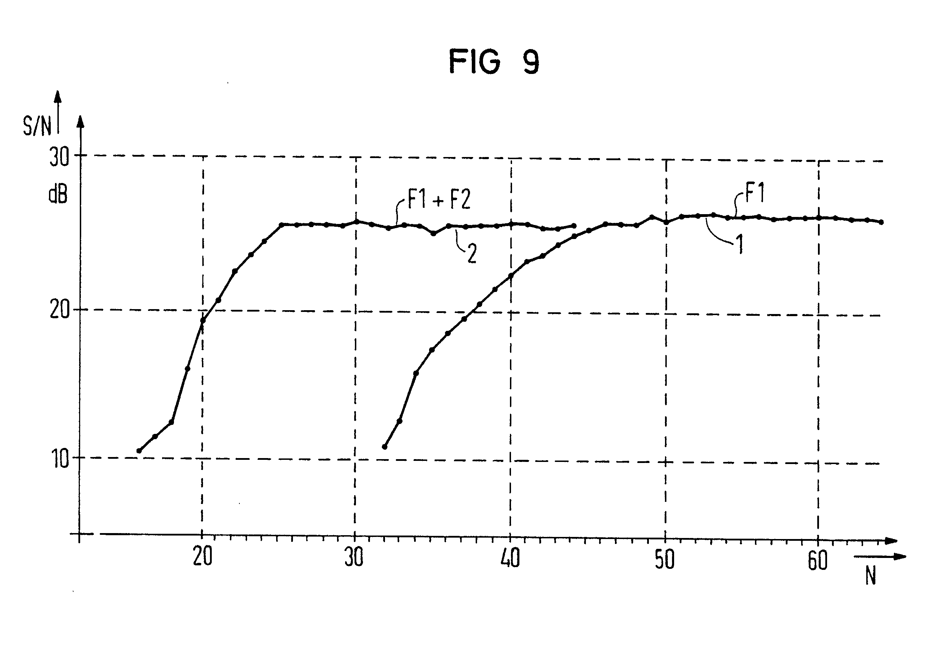

In Figur 9 ist der Rauschabstand S/N am Ausgang der Subtraktionsschaltung in Abhängigkeit von der Anzahl der Verzögerungsglieder dargestellt. Für einen Störabstand von beispielsweise 22 dB sind für ein System ohne rekursiven Anteil 40 Koeffizienten und für ein System mit rekursiven Anteil 22 Koeffizienten erforderlich. Das Diagramm gilt für eine Hauptinduktivität von 12 mH. Der Endwert des Rauschabstandes liegt ohne rekursiven Anteil bei 26,5 dB und bei 25,7 dB bei einem Koeffizienten $C_0$ = 0,875. Die

Verschlechterung ist auf die Verstärkung des Koeffizientenrauschens durch das Rekursivfilter zurückzuführen.

## Patentansprüche

1. Anordnung zur Erzeugung eines Kompensationssignals $(s_k)$ für digitale Übertragungseinrichtungen mit einer Filteranordnung (FA), die ein erstes eine endliche Impulsantwort $(h_1)$ aufweisendes Filter (F1) und ein Rekursivfilter (F2) mit einer flach verlaufenden abklingenden Impulsantwort $(h_2)$ aufweist, mit einer Nachstelleinrichtung (NE) zum Einstellen der Filterkoeffizienten $(C_1, C_2, ... C_N; C_0)$ und mit einer Subtrahiereinrichtung (SU), der zur Eliminierung des störenden Signalanteils $(s_E)$ aus dem Eingangssignal $(e + s_E)$ das durch die Filteranordnung (FA) aus einem kodierten Signal $(s_c)$ gewonnene Kompensationssignal $(s_k)$ zugeführt wird,
**dadurch gekennzeichnet,**
daß das erste Filter (F1) und das Rekursivfilter (F2) in Kette geschaltet sind, so daß die Impulsantwort $(h_a(t))$ der Filteranordnung (FA) dem Faltungsprodukt $(c(t) * h(t))$ der Impulsantworten des ersten Filters (F1) und des Rekursivfilters (F2) entspricht.

2. Anordnung nach Anspruch 1,
**dadurch gekennzeichnet,**
daß als erstes Filter (F1) ein Transversalfilter vorgesehen ist.

3. Anordnung nach Anspruch 1 oder 2,
**dadurch gekennzeichnet,**
daß die Verzögerungsglieder (V) jeweils eine Verzögerungsdauer (T) aufweisen, die dem Abstand zweier aufeinanderfolgender Abtasttakte und damit dem Kehrwert der Schrittgeschwindigkeit des codierten Signals aufweisen.

4. Anordnung nach einem der vorhergehenden Ansprüche,
**dadurch gekennzeichnet,**
daß ein Rekursivfilter (F2) erster Ordnung vorgesehen ist.

5. Anordnung nach Anspruch 4,
**dadurch gekennzeichnet,**
daß der Filterkoeffizient $(C_0)$ zwischen 0,7 und 0,985 liegt und so gewählt oder von der Nachstelleinrichtung (NE) eingestellt wird, daß sich ein minimaler Restfehler (f) für das Echosignal $(s_E)$ ergibt.

6. Anordnung nach Anspruch 5,
**dadurch gekennzeichnet,**
daß der Filterkoeffizient $C_0 = 1 - 1/2^p$ , p = 1 ... 6, entspricht.

7. Anordnung nach Anspruch 6,
**dadurch gekennzeichnet,**
daß das Rekursivfilter einen Summierer (AD3) mit drei Eingängen enthält, das dem ersten Eingang das Eingangssignal zugeführt wird und daß der Filterausgang (6) direkt auf den zweiten Eingang und über einen Multiplizierer (MR) auf den dritten Eingang rückgekoppelt ist.

8. Anordnung nach einem der vorhergehenden Ansprüche,
**dadurch gekennzeichnet,**
daß bei einer Induktivität des Übertragers in einer Gabelschaltung der Übertragungseinrichtung von 12 mH bis 15 mH der Filterkoeffizient $C_0 = 0,875$ ist.

9. Anordnung nach einem der vorhergehenden Ansprüche,
**dadurch gekennzeichnet,**
daß das erste Filter (F1) in einen ersten Mikrorechner (MP1) und das Rekursivfilter (F2) in einen zweiten Mikrorechner (MP2) realisiert ist.

10. Anordnung nach einem der Ansprüche 1 bis 8,
**dadurch gekennzeichnet,**

daß die Anordnung in einen Mikrorechner realisiert ist.

# FIG 1

# FIG 2

$$s_{E1} \approx h_a = s_{k1}$$

# FIG 3

# FIG 4

# FIG 5

## FIG 6

## FIG 7

## FIG 8

FIG 9

EP 0 445 380 A2